(19) **Europäisches Patentamt**
**European Patent Office**
**Office européen des brevets**

(11) **EP 3 136 147 B1**

(12) **EUROPEAN PATENT SPECIFICATION**

(45) Date of publication and mention
of the grant of the patent:
**08.07.2020 Bulletin 2020/28**

(51) Int Cl.:
***G02B 13/16*** *(2006.01)*     ***G02B 9/64*** *(2006.01)*

(21) Application number: **16184686.0**

(22) Date of filing: **18.08.2016**

(54) **IMAGING LENS SYSTEM, IMAGING OPTICAL DEVICE, AND DIGITAL APPLIANCE**

BILDGEBUNGSLINSENSYSTEM, OPTISCHE BILDGEBUNGSVORRICHTUNG UND DIGITALE VORRICHTUNG

SYSTÈME DE LENTILLE D'IMAGERIE, DISPOSITIF D'IMAGERIE OPTIQUE ET APPAREIL NUMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2015 JP 2015167595**

(43) Date of publication of application:
**01.03.2017 Bulletin 2017/09**

(73) Proprietor: **Konica Minolta, Inc.**
**Tokyo 100-7015 (JP)**

(72) Inventors:
- **Tanahashi, Daisuke**
 **Tokyo, 100-7015 (JP)**
- **Souma, Yoshihito**
 **Tokyo, 100-7015 (JP)**

(74) Representative: **Hoffmann Eitle**
**Patent- und Rechtsanwälte PartmbB**
**Arabellastraße 30**
**81925 München (DE)**

(56) References cited:
**JP-A- 2013 025 175**     **US-A1- 2009 244 724**
**US-A1- 2011 085 245**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

1. Field of the Invention

The present invention relates to imaging lens systems, imaging optical devices, and digital appliances, and more particularly relates to a compact, large-diameter imaging lens system suitable for an interchangeable-lens digital camera that captures an image of a subject with an image sensor (e.g., a solid-state image sensor such as a CCD (charge-coupled device) image sensor or a CMOS (complementary metal-oxide-semiconductor) image sensor), an imaging optical device that outputs as an electrical signal an image of a subject captured by such an imaging lens system and an image sensor, and a digital appliance having an image input function, such as a digital camera, that incorporates such an imaging optical device.

2. Description of Related Art

In recent years, increasingly high-pixel digital single-lens reflex cameras have been appearing; in addition, original-resolution viewing of images has been made easy for users. Accordingly, increasingly high optical performance has been sought in imaging lens systems. On the other hand, in mirrorless interchangeable-lens digital cameras with no swing-up mirror, for still faster focusing by contrast AF (autofocus), weight reduction is sought in the focusing group. To meet those requirements, imaging lens systems of a type that, despite maintaining high optical performance, is suitable for weight reduction in the focusing group are proposed in Patent Documents 1 and 2 identified below.

Patent Document 1: Japanese Patent Application Publication No. 2014-48488
Patent Document 2: Japanese Patent Application Publication No. 2014-238608

However, in the imaging lens system disclosed in Patent Document 1, the optical power of the first lens group relative to the optical power of the entire system is low; since no sufficient optical power is gained in the first lens group, the third lens group has to be responsible for the greater part of the optical power of the entire system. As a result, spherical aberration cannot be corrected satisfactorily, and thus it is impossible to achieve a large diameter with an f-number of about 1.4 and satisfactory aberration correction simultaneously.

On the other hand, in the imaging lens system disclosed in Patent Document 2, the number of lens elements in the focusing group is reduced for weight reduction to achieve faster focusing. However, the optical power of the first lens group compared with the second lens group, which is the focusing group, is low, and the second lens group has to produce most of the optical power. In general, as the optical power of the focusing group increases, the variation of aberrations resulting from the variation of the shooting distance increases. Thus, it is difficult to correct aberrations satisfactorily from the infinity shooting condition to the very close distance shooting condition. Further internal focus lenses are described in US2009244724 A1 and JP2013025175 A.

**SUMMARY OF THE INVENTION**

The present invention is defined by an imaging lens system according to independent claim 1. Optional features are recited in the dependent claims.

Devised against the background discussed above, the present invention aims to provide a compact, large-diameter imaging lens system that provides fast focusing and high performance during focusing, and an imaging optical device and a digital appliance provided with such an imaging lens system.

To achieve the above object, according to one aspect of the present invention, an imaging lens system includes, from the object side, a first lens group having a positive optical power, a second lens group having a positive optical power, and a third lens group having a positive optical power. Here, during focusing from an object at infinity to an object at a close distance, while the first and third lens groups remain stationary relative to the image surface, the second lens group moves toward the object side. Moreover, the second lens group has at least one negative lens element. Moreover, conditional formulae (1) to (3) below are fulfilled:

$$0.2 < P1 / P < 0.6 \qquad\qquad (1)$$

$$0.3 < P1 / P2 < 0.9 \tag{2}$$

$$0.45 < (P1 + P3) / P < 1.0 \tag{3}$$

where

P1    represents the optical power of the first lens group;
P2    represents the optical power of the second lens group;
P3    represents the optical power of the third lens group; and
P     represents the optical power of the entire system in the infinity shooting condition.

According to another aspect of the present invention, an imaging optical device includes an imaging lens system as described above and an image sensor that converts an optical image formed on an image-sensing surface into an electrical signal. Here, the imaging lens system is arranged such that an optical image of a subject is formed on the imaging surface of the image sensor.

According to yet another aspect of the present invention, a digital appliance includes an imaging optical device as described above so as to be additionally provided with at least one of a function of shooting a still image of the subject and a function of shooting a moving image of the subject.

**BRIEF DESCRIPTION OF THE DRAWINGS**

Fig. 1 is a lens construction diagram of a first embodiment (Example 1);
Fig. 2 is a lens construction diagram of a second embodiment (Example 2);
Fig. 3 is a lens construction diagram of a third embodiment (Example 3);
Fig. 4 is a lens construction diagram of a fourth embodiment (Example 4);
Figs. 5A to 5I are aberration diagrams of Example 1;
Figs. 6A to 6I are aberration diagrams of Example 2;
Figs. 7A to 7I are aberration diagrams of Example 3;
Figs. 8A to 8I are aberration diagrams of Example 4; and
Fig. 9 is a schematic diagram showing an example of an outline configuration of a digital appliance incorporating an imaging optical device.

**DETAILED DESCRIPTION OF PREFERRED EMBODIMENTS**

Hereinafter, imaging lens systems, imaging optical devices, and digital appliances according to the present invention will be described. An imaging lens system according to an embodiment of the present invention is characterized in that it is composed of, from the object side, a first lens group having a positive optical power, a second lens group having a positive optical power, and a third lens group having a positive optical power (an optical power being a quantity defined as the reciprocal of a focal length); in that, during focusing from an object at infinity to an object at a close distance, while the first and third lens groups remain stationary relative to the image surface, the second lens group moves toward the object side; in that the second lens group has at least one negative lens element; and in that conditional formulae (1) to (3) below are fulfilled.

$$0.2 < P1 / P < 0.6 \tag{1}$$

$$0.3 < P1 / P2 < 0.9 \tag{2}$$

$$0.45 < (P1 + P3) / P < 1.0 \tag{3}$$

where

P1     represents the optical power of the first lens group;

P2     represents the optical power of the second lens group;

P3     represents the optical power of the third lens group; and

P     represents the optical power of the entire system in the infinity shooting condition.

By adopting a design in which, for focusing from an object at an infinity to an object at a very close distance, while the first and third lens groups are kept stationary, the second lens group alone is moved, it is possible to reduce the weight of the focusing group and to increase the focusing speed. That is, by suppressing the weight of the focusing group, it is possible to increase the speed of autofocusing and thereby to reduce the time required for focusing movement. This leads to advantages such as an excellent feel of use and a reduced load on the motor.

For stable correction of chromatic aberration from the infinity shooting condition to the very close distance shooting condition, the focusing group itself needs to be sufficiently corrected for chromatic aberration, and for that purpose, at least one negative lens element is needed in the focusing group. It is particularly preferable that only one negative lens element be included within the second lens group. By including only one negative lens element within the second lens group, it is possible to effectively suppress the weight of the focusing group.

To reduce the diameter of the focusing group, it is necessary to gain as high an optical power as possible in the first lens group, and with respect to the optical power of the entire system, the optical power of the first lens group needs to be in the range of conditional formula (1) above. From this perspective, conditional formula (1) defines a preferred conditional range as to the optical power of the first lens group.

Below the lower limit of conditional formula (1), the optical power of the first lens group is low; then, to keep the total length constant, the optical power of the second lens group needs to be comparatively high. Thus, it is difficult to suppress the chromatic coma occurring within the second lens group; also, astigmatism is large, and it is difficult to make the image surface uniform. When the optical power for which the first lens group is responsible is reduced while the optical power for which the third lens group is responsible is increased, it is difficult to satisfactorily correct spherical aberration. Above the upper limit of conditional formula (1), the angle of the light rays incident on the second lens group is large, and the pupil magnification in close distance shooting is high. In addition, the curvature of field on the meridional image surface is large, and is difficult to correct. Accordingly, by fulfilling conditional formula (1), it is possible to reduce the weight of the focusing group and achieve high performance during focusing with a satisfactory balance in a compact, large-diameter imaging lens system.

In an inner focus design where, in a three-group construction with a positive-positive power arrangement on the object side, the second lens group is the focusing group, the power ratio between the first and second lens groups is important for satisfactory aberration correction, and needs to be within the range of conditional formula (2). From this perspective, conditional formula (2) defines a preferred conditional range as to the optical powers of the first and second lens groups.

Above the upper limit of conditional formula (2), the optical power of the focusing group is insufficient; then the amount of movement of the focusing group from infinity shooting to close distance shooting is large, and the focusing speed during focusing is low. Moreover, the curvature of field in infinity shooting tends to be poor. Below the lower limit of conditional formula (2), the optical power of the second lens group relative to the first lens group is too high; then it is difficult to suppress the chromatic coma occurring within the second lens group. In general, as the optical power of the focusing group increases, the variation of aberrations resulting from the variation of the shooting distance increases. Thus, an increase in the optical power of the second lens group makes it difficult to correct aberrations satisfactorily from the infinity shooting condition to the very close distance shooting condition. Accordingly, by fulfilling conditional formula (2), it is possible to reduce the focusing movement amount and achieve high performance during focusing with a satisfactory balance in a compact, large-diameter imaging lens system.

In the first and third lens groups, which are stationary relative to the image surface, how light rays pass through them basically does not vary greatly when focusing is performed. Thus, a high proportion of the variation of performance from infinity shooting to very close distance shooting is ascribable to the second lens group. Therefore, by defining the proportion of the sum of the optical powers of the first and third lens groups in the optical power of the entire system, it is possible to allocate a proper optical power to the second lens group. That is, the ratio of the total optical power of the first and third lens groups to the optical power of the entire system needs to be within the range of conditional formula (3). From this perspective, conditional formula (3) defines a preferred conditional range as to the optical powers of the first and third lens groups.

Below the lower limit of conditional formula (3), the optical power of the second lens group is relatively high; then the amount of movement of the focusing group is suppressed, but it is difficult to suppress the variation of astigmatism and curvature of field resulting from focusing from the infinity shooting condition to the very close distance shooting condition. Above the upper limit of conditional formula (3), the optical power of the second lens group is relatively low; then the amount of movement of the focusing group from the infinity shooting condition to the very close distance shooting condition is large, and the focusing speed during focusing is low. Moreover, the curvature of field in infinity shooting tends to be poor. Accordingly, by fulfilling conditional formula (3), it is possible to reduce the focusing movement amount and achieve high performance during focusing with a satisfactory balance in a compact, large-diameter imaging lens system.

With the distinctive construction described above, it is possible to realize a compact, large-diameter imaging lens system that achieves high speed in focusing and high performance during focusing, and an imaging optical device provided with such an imaging lens system. For example, it is possible to realize an imaging lens system that is an inner-focus large-diameter lens system with a compact lens total length and reduced performance variation during focusing and that can effectively cope with contrast AF owing to a reduced focusing group weight and a reduced focusing movement amount, and an imaging optical device. By using such an imaging lens system or an imaging optical device in a digital appliance (e.g., a digital camera), it is possible to add a high-performance image input function to the digital appliance in a light-weight and compact fashion, and this contributes to making the digital appliance compact, low-cost, high-performance, high-functionality, etc. For example, an imaging lens system that embodies the present invention is suitable as an interchangeable lens for digital cameras and video cameras, and thus it is possible to realize a light-weight, compact interchangeable lens that is convenient to carry around. Conditions, etc. for obtaining such effects with a satisfactory balance and for achieving still higher optical performance and further weight reduction, size reduction, etc. will be described below.

It is preferable that conditional formula (1a) below be fulfilled.

$$0.3 < P1 / P < 0.55 \qquad\qquad (1a)$$

Conditional formula (1a) defines, within the conditional range defined by conditional formula (1) above, a still preferable conditional range from the above-mentioned and other perspectives. Accordingly, preferably, by fulfilling conditional formula (1a), it is possible to enhance the above-mentioned effects.

It is preferable that conditional formula (2a) below be fulfilled.

$$0.4 < P1 / P2 < 0.75 \qquad\qquad (2a)$$

Conditional formula (2a) defines, within the conditional range defined by conditional formula (2) above, a still preferable conditional range from the above-mentioned and other perspectives. Accordingly, preferably, by fulfilling conditional formula (2a), it is possible to enhance the above-mentioned effects.

It is preferable that conditional formula (3a) below be fulfilled.

$$0.45 < (P1 + P3) / P < 0.8 \qquad\qquad (3a)$$

Conditional formula (3a) defines, within the conditional range defined by conditional formula (3) above, a still preferable conditional range from the above-mentioned and other perspectives. Accordingly, preferably, by fulfilling conditional formula (3a), it is possible to enhance the above-mentioned effects.

It is preferable that the most image-side lens element in the first lens group have a negative optical power. To suppress the height of the light beam incident on the second lens group, which is the focusing group, it is preferable that the most image-side lens element in the first lens group have a negative optical power. By giving the most image-side lens element in the first lens group a negative optical power, it is possible to locate the rear-side principal point of the first lens group closer to the object side, and to reduce the height of the light beam incident on the focusing group. It is thus possible to make the focusing group compact in the radial direction and reduce its weight.

According to the invention, the most object-side lens element in the first lens group have a negative optical power, and that the lens element immediately subsequent to it have a negative optical power. To reduce the overall focal length, and also to reduce aberrations, it is necessary to temporarily broaden the light beam within the first lens group, and it is preferable that the most object-side lens element in the first lens group have a negative optical power, and that the immediately subsequent lens element have a negative optical power. By adopting this construction, it is possible to temporarily swing up the axial light beam, and it is possible to reduce the overall focal length and improve, in particular, axial aberrations simultaneously. In particular, to reduce the overall length and to alleviate distortion, it is preferable that the most object-side lens element in the first lens group be a negative meniscus lens element convex to the object side.

It is preferable that conditional formula (4) below be fulfilled.

$$0.3 < P2 / P < 0.95 \qquad\qquad (4)$$

where

P2     represents the optical power of the second lens group; and
P      represents the optical power of the entire system in the infinity shooting condition.

Conditional formula (4) defines a preferred conditional range as to the optical power of the second lens group. Below the lower limit of conditional formula (4), the optical power of the second lens group is too low, and thus the amount of movement for focusing tends to increase. As a result, the focusing speed from the infinity shooting condition to the very close distance shooting condition is low, and the curvature of field in infinity shooting tends to be poor. On the other hand, above the upper limit of conditional formula (4), the amount of movement of the second lens group for focusing tends to be suppressed, the optical power of the focusing group is too high, and thus the variation of astigmatism and curvature of field resulting from focusing from the infinity shooting condition to the very close distance shooting condition tends to be difficult to suppress. Accordingly, by fulfilling conditional formula (4), it is possible to reduce the focusing movement amount and achieve high performance during focusing with a satisfactory balance effectively in a compact, large-diameter imaging lens system.
It is preferable that conditional formula (4a) below be fulfilled.

$$0.6 < P2 / P < 0.85 \qquad\qquad (4a)$$

Conditional formula (4a) defines, within the conditional range defined by conditional formula (4) above, a still preferable conditional range from the above-mentioned and other perspectives. Accordingly, preferably, by fulfilling conditional formula (4a), it is possible to enhance the above-mentioned effects.
It is preferable that an aperture stop be provided between the first and second lens groups. By arranging an aperture stop between the first and second lens groups, where the light beam diameter is small, it is possible to reduce the aperture diameter, and as a result to reduce the diameter of the entire interchangeable lens including the lens barrel.
It is preferable that, in the first lens group, three or more lens elements having a positive optical power be arranged successively. In an attempt to temporarily broaden the light beam within the first lens group with a view to reducing the overall focal length and also suppressing aberrations, it is necessary to gain as high an optical power as possible within the first lens group. By arranging three or more lens elements having a positive optical power successively within the first lens group, it is possible to give a gentle bend to the light rays that pass through it, and thus to suppress the aberrations (e.g., spherical aberration) occurring there.
It is preferable that at least one of the lens elements having a positive optical power within the first lens group fulfill conditional formula (5) below.

$$nd > 1.79 \qquad\qquad (5)$$

where

nd     represents the refractive index for the d-line.

By using a positive lens element that fulfills conditional formula (5), it is possible to reduce the total length and improve curvature of field. A lens material that fulfills conditional formula (5) is a high-refractive-index material. Thus, by using a positive lens element fulfilling conditional formula (5) as, in particular, a single lens element, it is possible to obtain the same optical power with a gentler curvature, and thus to suppress a sharp bend in light rays; it is thus possible to suppress, in particular, spherical aberration.
It is preferable that at least one of the lens elements having a positive optical power within the first lens group fulfill conditional formula (6) below.

$$vd > 60 \qquad\qquad (6)$$

where

vd     represents the Abbe number for the d-line.

By using a positive lens element that fulfills conditional formula (6), it is possible to satisfactorily correct axial chromatic aberration and spherical aberration. Using a positive lens element fulfilling conditional formula (6) as, in particular, a cemented lens element brings a large dispersion difference from a negative lens element, and is thus effective in correcting axial chromatic aberration.

It is preferable that the second lens group be composed only of two, a negative and a positive, lens elements. With a second lens group of a two-element construction, it is preferable, from the perspective of aberration correction, that the negative lens element within the second lens group be arranged immediately subsequent to the aperture stop and have a concentric meniscus shape with a concave face facing the aperture stop side. Using as the most object-side lens element in the first lens group a negative meniscus lens element convex to the object side is effective in correcting distortion and curvature of field.

An imaging lens system according to an embodiment of the present invention is suitable for use as an imaging lens system for a digital appliance having an image input function (e.g., an interchangeable-lens digital camera); by combining it with an image sensor or the like, it is possible to build an imaging optical device that optically captures an image of a subject and that outputs it as an electrical signal. An imaging optical device is an optical device that constitutes a main component of a camera used to shoot still and moving images of a subject, and is built by being composed of, for example, from the object (i.e., subject) side, an imaging lens system that forms an optical image of an object and an image sensor that converts the optical image formed by the imaging lens system into an electrical signal. By arranging the imaging lens system having the distinctive construction described above such that an optical image of a subject is formed on the light-receiving surface (i.e., imaging surface) of the image sensor, it is possible to realize an imaging optical device, and a digital appliance provided with it, that is compact, low-cost, and high-performance.

Examples of digital appliances having an image input function include cameras such as digital cameras, video cameras, monitoring cameras, security cameras, vehicle-mounted cameras, and videophone cameras; also included are personal computers, mobile digital appliances (e.g., mobile telephones, smartphones (high-functionality mobile telephones), tablet terminals, and mobile computers), peripheral appliances for those (such as scanners, printers, and mice), and other digital appliances (such as drive recorders and defense appliances) that incorporate a camera function by integration or external attachment. As will be understood from these examples, not only is it possible to build a camera by use of an imaging optical device, but it is also possible to add a camera function to various appliances by incorporating an imaging optical device in them. For example, it is possible to build a digital appliance having an image input function such as a camera-equipped mobile telephone.

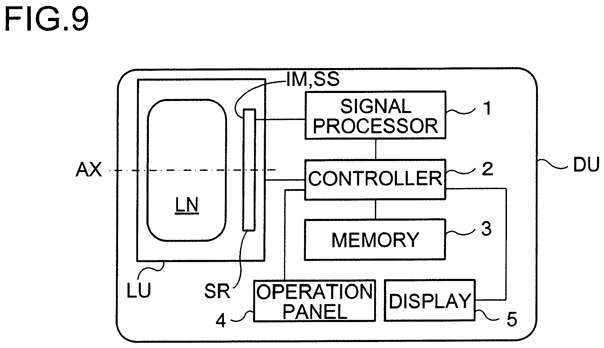

Fig. 9 is a schematic sectional view showing an example of an outline configuration of a digital appliance DU as an example of a digital appliance having an image input function. An imaging optical device LU incorporated in the digital appliance DU shown in Fig. 9 is provided with, from the object (i.e., subject) side, an imaging lens system LN (AX representing the optical axis) that forms an optical image (image surface) IM of an object and an image sensor SR that convers the optical image IM formed on a light-receiving surface (imaging surface) SS by the imaging lens system LN into an electrical signal; as necessary, a plane-parallel plate (corresponding to, e.g., a cover glass of the image sensor SR; and to optical filters and the like such as an optical low-pass filter and an infrared-cut filter which are arranged as necessary) is also arranged. When a digital appliance DU having an image input function is built by use of the imaging optical device LU, typically the imaging optical device LU is arranged inside the body of the digital appliance DU. To realize a camera function, any configuration may be adopted as necessary. For example, an imaging optical device LU built as a unit may be configured to be detachably attached to, or rotatable relative to, the body of the digital appliance DU.

The imaging lens system LN is an imaging lens system of a three-group construction, adopts an inner-focus design in which focusing from infinity to a close distance is achieved by moving the second lens group having a positive optical power toward the object side along the optical axis AX while keeping the first and third lens groups stationary, and is configured to form an optical image IM on the light-receiving surface SS of an image sensor SR. As the image sensor SR, for example, a solid-state image sensor such as a CCD image sensor or a CMOS image sensor having a plurality of pixels is used. The imaging lens system LN is arranged such that an optical image IM of a subject is formed on the light-receiving surface SS, which is the photoelectric conversion portion of the image sensor SR, and thus the optical image IM formed by the imaging lens system LN is converted into an electrical signal by the image sensor SR.

The digital appliance DU is provided with, in addition to the imaging optical device LU, a signal processor 1, a controller 2, a memory 3, an operation panel 4, a display 5, etc. The signal generated by the image sensor SR is subjected to predetermined digital image processing, image compression processing, etc. as necessary in the signal processor 1, and is recorded as a digital video signal in the memory 3 (such as a semiconductor memory or an optical disc) or is, as the case may be, transferred to another appliance via a cable or after being converted into an infrared signal or the like (e.g., a communication function of a portable telephone). The controller 2 comprises a microcomputer, and comprehensively performs control of functions such as image shooting functions (still image shooting function, moving image shooting function, etc.), image reproduction functions, etc.; control of lens movement mechanisms for focusing, camera shake correction, etc.; and so forth. For example, the controller 2 performs control on the imaging optical device LU so that at least one of shooting of a still image of a subject and shooting of a moving image of a subject is performed. The display 5 is a part that includes a display such as a liquid crystal monitor, and performs image display by using an image signal converted by the image sensor SR or image information recorded in the memory 3. The operation panel 4 is a part that includes operation members such as operation buttons (e.g., a release button) and an operation dial (e.g., a shooting mode dial), and conveys information entered through operation by an operator to the controller 2.

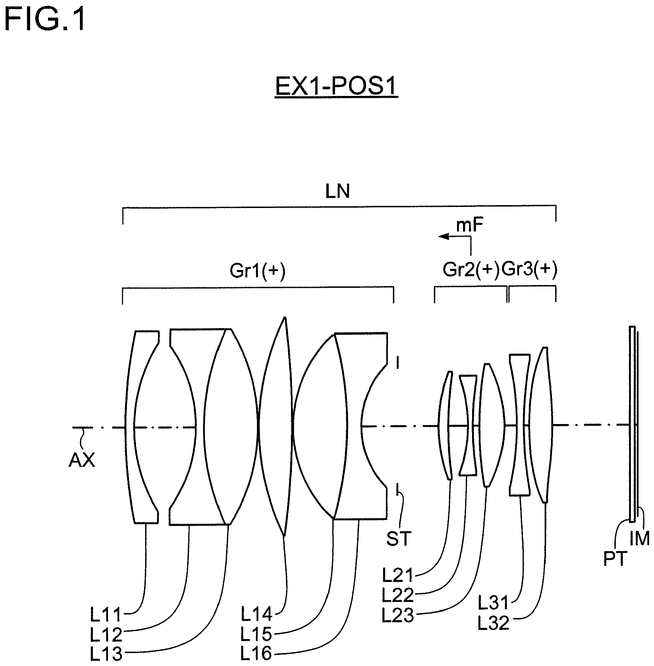

Next, by way of a first to a fourth embodiment of the imaging lens system LN, its specific optical constructions will be described in more detail. Figs. 1 to 4 are lens construction diagrams corresponding to the imaging lens system LN constituting the first to fourth embodiments respectively, and show the lens arrangement at a first focus position POS1 (the subject-at-infinity condition) in an optical section. The first to fourth embodiments are of a three-group, positive-positive-positive, construction; during focusing, while the first and third lens groups Gr1 and Gr3 remain stationary, the second lens group Gr2 moves toward the object side along the optical axis AX. That is, the second lens group Gr2 is the focusing group, and, as indicated by arrow mF, moves toward the object side during focusing from an object at infinity to an object at a close distance. The second lens group Gr2 is of a three-element, positive-negative-positive, construction in the first and second embodiments, and is of a two-element, negative-positive, construction in the third and fourth embodiments.

In the first to fourth embodiments, the first lens group Gr1 is composed of, from the object side, a negative lens element L11, a negative lens element L12, a positive lens element L13, a positive lens element L14, a positive lens element L15, and a negative lens element L16 (the power arrangement of the lens elements L11 to L16 being negative-negative-positive-positive-positive-negative). The lens elements L12 and L13 constitute a cemented lens element, and the lens elements L15 and L16 constitute a cemented lens element. In the first lens group Gr1, the most object-side lens element L11, the lens element L12 immediately subsequent to it, and the most image-side lens element L16 have a negative optical power, and three lens elements L13 to L15 having a positive optical power are arranged successively. Between the first and second lens groups Gr1 and Gr2, an aperture stop ST is arranged.

In the first and second embodiments, the second lens group Gr2 is composed of, from the object side, a positive lens element L21, a negative lens element L22, and a positive lens element L23 (the power arrangement of the lens elements L21 to L23 being positive-negative-positive). In the third and fourth embodiments, the second lens group Gr2 is composed of, from the object side, a negative lens element L21 and a positive lens element L22 (the power arrangement of the lens elements L21 and L22 being negative-positive).

In the first and second embodiments, the third lens group Gr3 is composed of, from the object side, a negative lens element L31 and a positive lens element L32 (the power arrangement of the lens elements L31 and L32 being negative-positive). In the third and fourth embodiments, the third lens group Gr3 is composed of, from the object side, a positive lens element L31, a negative lens element L32, and a positive lens element L33 (the power arrangement of the lens elements L31 to L33 being positive-negative-positive). Between the imaging lens system LN and the image surface IM, a plane-parallel plate PT is arranged, which is a flat glass plate that is equivalent to the total optical thickness of the cover glass of the image sensor SR, etc.

In the imaging lens system LN (Fig. 1) of the first embodiment, each lens group is composed, from the object side, as follows. The first lens group Gr1 is composed of a negative meniscus lens element L11 convex to the object side, a cemented lens element made up of a biconcave negative lens element L12 and a biconvex positive lens element L13, a biconvex positive lens element L14, and a cemented lens element made up of a biconvex positive lens element L15 and a biconcave negative lens element L16. The second lens group Gr2 is composed of a positive meniscus lens element L21 convex to the object side, a biconcave negative lens element L22, and a biconvex positive lens element L23 (having aspherical surfaces on both sides). The third lens group Gr3 is composed of a biconcave negative lens element L31 and a biconvex positive lens element L32 (having aspherical surfaces on both sides).

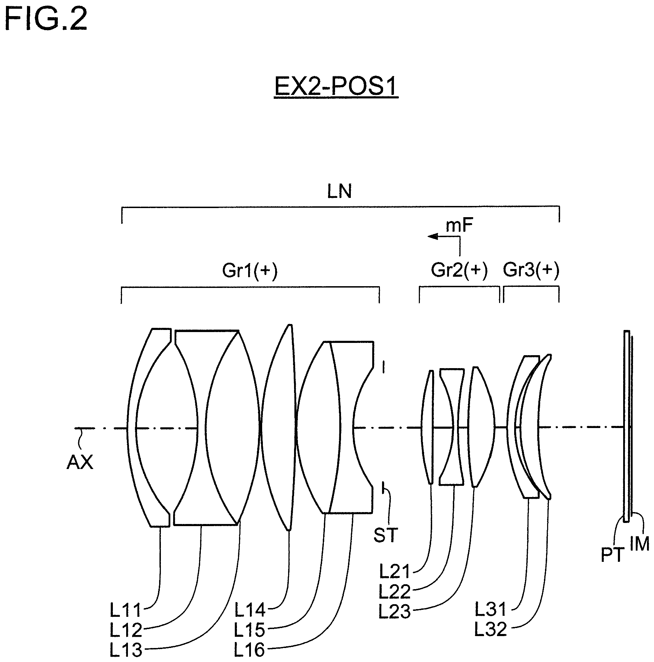

In the imaging lens system LN (Fig. 2) of the second embodiment, each lens group is composed, from the object side, as follows. The first lens group Gr1 is composed of a negative meniscus lens element L11 convex to the object side, a cemented lens element made up of a biconcave negative lens element L12 and a biconvex positive lens element L13, a biconvex positive lens element L14, and a cemented lens element made up of a biconvex positive lens element L15 and a biconcave negative lens element L16. The second lens group Gr2 is composed of a biconvex positive lens element L21, a biconcave negative lens element L22, and a biconvex positive lens element L23 (having aspherical surfaces on both sides). The third lens group Gr3 is composed of a negative meniscus lens element L31 convex to the object side and a positive meniscus lens element L32 convex to the object side (having aspherical surfaces on both sides).

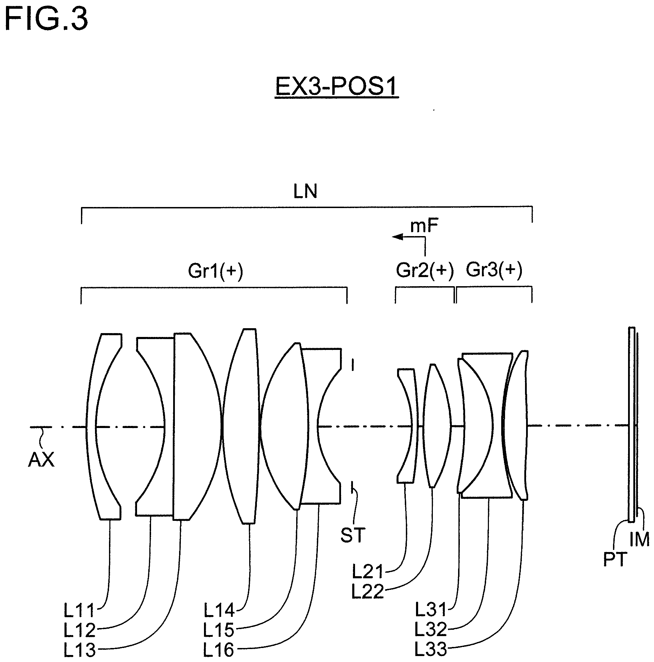

In the imaging lens system LN (Fig. 3) of the third embodiment, each lens group is composed, from the object side, as follows. The first lens group Gr1 is composed of a negative meniscus lens element L11 convex to the object side, a cemented lens element made up of a negative meniscus lens element L12 concave to the object side and a positive meniscus lens element L13 convex to the image side, a biconvex positive lens element L14, and a cemented lens element made up of a biconvex positive lens element L15 and a biconcave negative lens element L16. The second lens group Gr2 is composed of a negative meniscus lens element L21 concave to the object side and a biconvex positive lens element L22 (having aspherical surfaces on both sides). The third lens group Gr3 is composed of a cemented lens element made up of a positive meniscus lens element L31 concave to the object side and a biconcave negative lens element L32, and a biconvex positive lens element L33 (having aspherical surfaces on both sides).

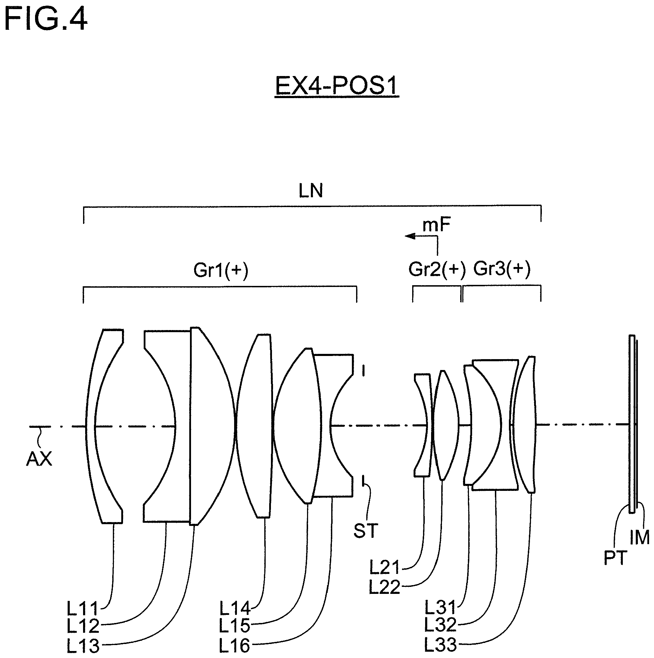

In the imaging lens system LN (Fig. 4) of the fourth embodiment, each lens group is composed, from the object side, as follows. The first lens group Gr1 is composed of a negative meniscus lens element L11 convex to the object side, a cemented lens element made up of a biconcave negative lens element L12 and a biconvex positive lens element L13, a biconvex positive lens element L14, and a cemented lens element made up of a biconvex positive lens element L15 and a biconcave negative lens element L16. The second lens group Gr2 is composed of a negative meniscus lens element L21 concave to the object side and a biconvex positive lens element L22 (having aspherical surfaces on both sides). The third lens group Gr3 is composed of a cemented lens element made up of a positive meniscus lens element L31 concave to the object side and a biconcave negative lens element L32, and a biconvex positive lens element L33 (having aspherical surfaces on both sides).

## EXAMPLES

Hereinafter, the configuration, etc. of imaging lens systems embodying the present invention will be described more specifically with reference to the construction data, etc. of practical examples. Examples 1 to 4 (EX 1 to 4) discussed below are numerical examples corresponding to the first to fourth embodiments, respectively, described above, and the lens construction diagrams (Figs. 1 to 4) showing the first to fourth embodiments show the optical construction of the corresponding ones of Examples 1 to 4 respectively.

In the construction data of each practical example, listed as surface data are, from left, surface number i (object: object surface, image: image surface, ST: aperture surface), paraxial radius of curvature r (mm), axial surface-to-surface distance d (mm), refractive index nd for the d-line (with a wavelength of 587.56 nm), and Abbe number vd for the d-line. A surface whose surface number is marked with an asterisk ("*") is an aspherical surface, of which the surface shape is defined by formula (AS) below in a local rectangular coordinate system (x, y, z) having its origin at the vertex of the surface. Listed as aspherical surface data are aspherical surface coefficients, etc. In the aspherical surface data of each practical example, the coefficient of any term that does not appear there equals zero, and throughout the data, "E-n" stands for $\times$ $10^{-n}$.

$$z = (c \cdot h^2) / \{1 + \sqrt{[1 - (1 + K) \cdot c^2 \cdot h^2]}\} + \Sigma(Aj \cdot h^j) \qquad (AS)$$

where

h    represents the height in a direction perpendicular to the z-axis (optical axis AX) ($h^2 = x^2 + y^2$);
z    represents the amount of sag in the optical axis AX direction at the height h (relative to the vertex);
c    represents the curvature (the reciprocal of the radius of curvature) at the vertex;
K    represents the conic constant; and
Aj   represents the aspherical surface coefficient of order j.

Listed as miscellaneous data are, for each of a first, a second, and a third focus position POS1, POS2, and POS3, focal length of the entire system (Fl, mm), f-number (Fno.), half-angle of view ($\omega$, °), maximum image height (y'max, mm), lens total length (TL, mm), backfocus (BF, mm), and each axial surface-to-surface distance di (i: surface number, mm) that varies with focusing. The lens total length TL is the distance from the foremost lens surface to the image surface (image) IM, and a backfocus BF is the distance from the image-side surface of the plane-parallel plate PT to the image surface IM. Listed as lens group data are the focal lengths (fl, f2, f3; mm) of the lens groups Gr1, Gr2, and GR3 respectively. Table 1 shows the values corresponding to the conditional formulae in each practical example.

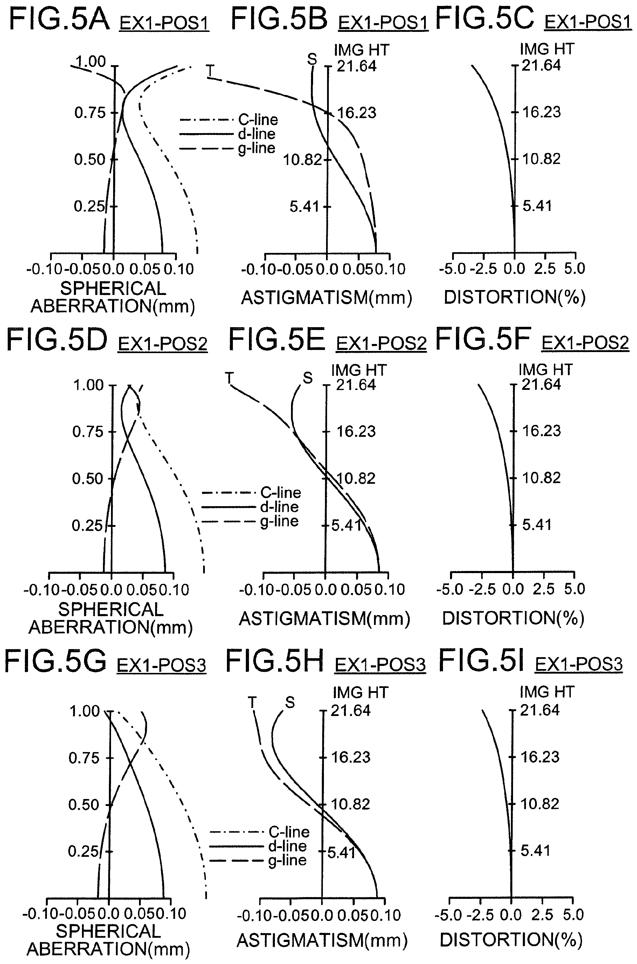

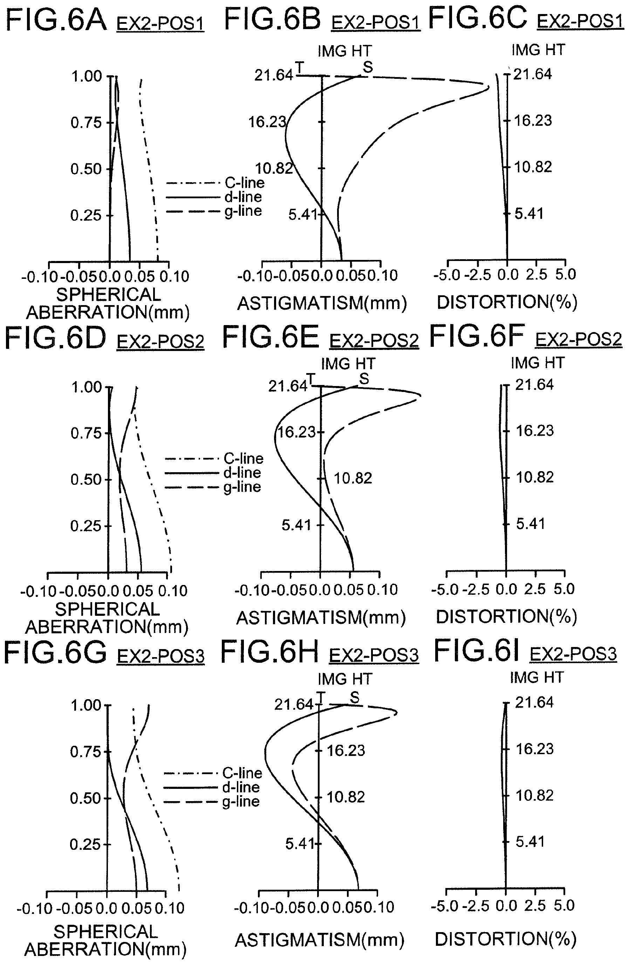

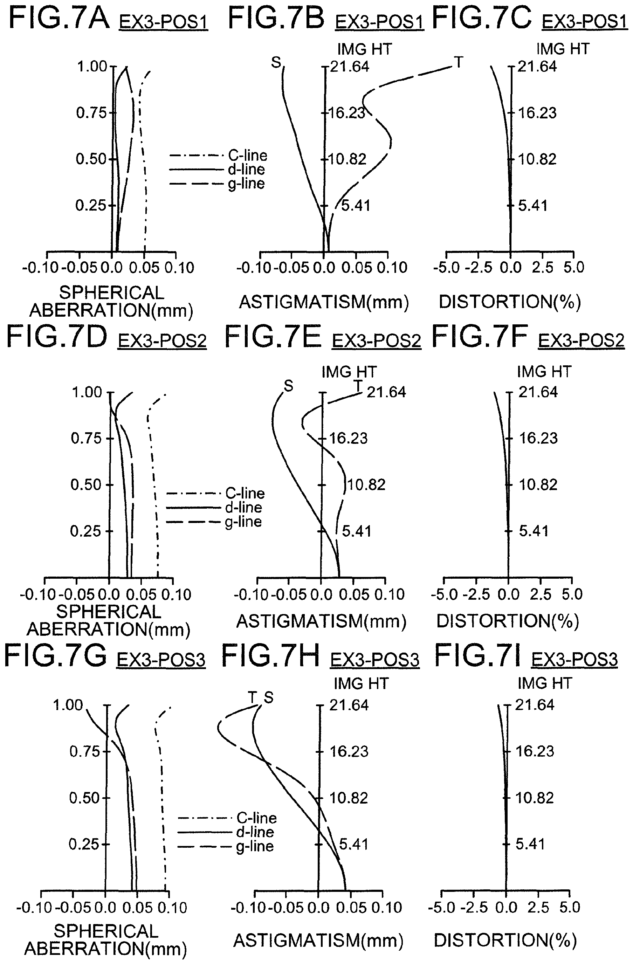

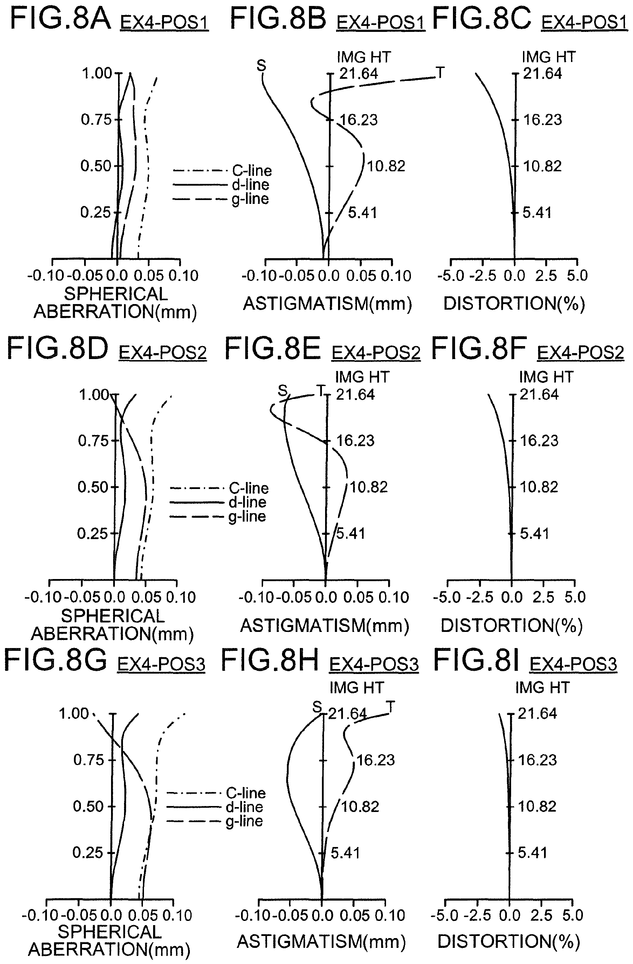

Figs. 5A to 5I, 6A to 6I, 7A to 7I, and 8A to 8I are aberration diagrams (longitudinal aberration diagrams in the infinity-focused condition) corresponding to Examples 1 to 4 (EX 1 to EX 4) respectively, Figs. 5A to 5C, 6A to 6C, 7A to 7C, and 8A to 8C showing the aberrations at the first focal position POS1, Figs. 5D to 5F, 6D to 6F, 7D to 7F, and 8D to 8F showing the aberrations at the second focal position POS2, and Figs. 5G to 5I, 6G to 6I, 7G to 7I, and 8G to 8I showing the aberrations at the third focal position POS3. Figs. 5A, 5D, 5G, 6A, 6D, 6G, 7A, 7D, 7G, 8A, 8D, and 8G are spherical aberration diagrams, Figs. 5B, 5E, 5H, 6B, 6E, 6H, 7B, 7E, 7H, 8B, 8E, and 8H are astigmatism diagrams, and Figs. 5C, 5F, 5I, 6C, 6F, 6I, 7C, 7F, 7I, 8C, 8F, and 8I are distortion diagrams.

In the spherical aberration diagrams, the amount of spherical aberration for the Cline (with a wavelength of 656.28 nm) indicated by a dash-and-dot line, the amount of spherical aberration for the d-line (with a wavelength of 587.56 nm) indicated by a solid line, and the amount of spherical aberration for the g-line (with a wavelength of 435.84 nm) indicated by a broken line are each given as the deviation (mm) from the paraxial image surface in the optical axis AX direction, the vertical axis representing the value obtained by normalizing the height of incidence on the pupil with respect to the maximum height there (i.e., the relative pupil height). In the astigmatism diagrams, a broken line T represents the tangential image surface for the d-line and a solid line S represents the sagittal image surface for the d-line, each given as the deviation (mm) from the paraxial image surface in the optical axis AX direction, the vertical axis representing the image height (IMG HT, mm). In the distortion diagrams, the horizontal axis represents the distortion (%) for the d-line, and the vertical axis represents the image height (IMG HT, mm). The maximum value of the image height IMG HT is the maximum image height y'max on the image surface IM, and corresponds to one-half of the diagonal length of the light-receiving surface SS of the image sensor SR.

**Example 1**

Unit : mm

Surface Data

| i | r | d | nd | vd |
|---|---|---|---|---|
| object | infinity | variable:d0 | | |
| 1 | 130.905 | 2.400 | 1.51680 | 64.17 |
| 2 | 42.994 | 17.142 | | |
| 3 | -37.064 | 2.277 | 1.74077 | 27.76 |
| 4 | 60.459 | 15.182 | 1.69680 | 55.46 |
| 5 | -49.318 | 0.300 | | |
| 6 | 65.854 | 9.237 | 1.92286 | 20.88 |
| 7 | -226.822 | 0.300 | | |
| 8 | 33.813 | 14.873 | 1.59282 | 68.62 |
| 9 | -90.894 | 3.936 | 1.72825 | 28.32 |
| 10 | 23.690 | 9.901 | | |
| 11(ST) | infinity | variable | | |
| 12 | 42.044 | 2.622 | 1.83481 | 42.72 |
| 13 | 100.805 | 5.363 | | |
| 14 | -38.554 | 1.300 | 1.76182 | 26.61 |
| 15 | 79.645 | 1.849 | | |
| 16* | 100.609 | 6.914 | 1.73077 | 40.51 |
| 17* | -32.664 | variable | | |
| 18 | -73.645 | 1.900 | 1.69895 | 30.05 |
| 19 | 98.001 | 1.500 | | |
| 20* | 69.849 | 6.526 | 1.80860 | 40.42 |
| 21* | -86.432 | 21.790 | | |
| 22 | infinity | 1.410 | 1.51680 | 64.20 |
| 23 | infinity | 0.800 | | |
| image | infinity | | | |

Aspherical Surface Data

| i | K | A4 | A6 | A8 |
|---|---|---|---|---|
| 16 | 0.0000E+00 | -1.3716E-06 | 6.8119E-09 | 0.0000E+00 |
| 17 | 0.0000E+00 | 2.6675E-06 | 5.9131E-09 | -8.3101E-12 |
| 20 | 0.0000E+00 | 8.1707E-07 | 6.9086E-09 | 0.0000E+00 |
| 21 | 0.0000E+00 | 1.5593E-06 | 5.5370E-09 | 1.0950E-11 |

Aspherical Surface Data

| i | A10 | A12 | A14 | A16 |
|---|---|---|---|---|
| 16 | 0.0000E+00 | 0.0000E+00 | 0.0000E+00 | 0.0000E+00 |
| 17 | 1.7159E-14 | 0.0000E+00 | 0.0000E+00 | 0.0000E+00 |
| 20 | 0.0000E+00 | 0.0000E+00 | 0.0000E+00 | 0.0000E+00 |
| 21 | -6.5642E-15 | 0.0000E+00 | 0.0000E+00 | 0.0000E+00 |

Miscellaneous Data

| | POS1 | POS2 | POS3 |
|---|---|---|---|
| Fl | 51.964 | 51.175 | 50.624 |
| Fno. | 1.440 | 1.554 | 1.672 |
| ω | 22.609 | 22.215 | 21.758 |
| y'max | 21.64 | 21.64 | 21.64 |
| TL | 142.000 | 142.000 | 142.000 |
| BF | 0.800 | 0.800 | 0.800 |
| d0 | infinity | 858.000 | 458.000 |
| d11 | 10.989 | 6.424 | 2.867 |
| d17 | 3.491 | 8.055 | 11.613 |

Lens Group Data

| Group (Surface) | Focal Length |
|---|---|
| 1 (1-10) | 108.496 |
| 2 (12-17) | 72.909 |
| 3 (18-21) | 194.608 |

**Example 2**

Unit : mm

Surface Data

| i | r | d | nd | vd |
|---|---|---|---|---|
| object | infinity | variable:d0 | | |
| 1 | 60.446 | 2.400 | 1.51680 | 64.17 |
| 2 | 35.559 | 17.222 | | |
| 3 | -45.185 | 2.300 | 1.85025 | 30.05 |
| 4 | 43.354 | 15.676 | 1.83481 | 42.72 |
| 5 | -60.296 | 0.500 | | |
| 6 | 58.442 | 9.658 | 1.92286 | 20.88 |
| 7 | -319.201 | 0.300 | | |
| 8 | 42.295 | 12.000 | 1.59282 | 68.62 |
| 9 | -95.931 | 3.541 | 1.78472 | 25.72 |
| 10 | 28.217 | 8.351 | | |
| 11(ST) | infinity | variable | | |
| 12 | 56.920 | 3.073 | 1.72916 | 54.67 |
| 13 | -28358.903 | 5.741 | | |
| 14 | -28.937 | 1.300 | 1.75520 | 27.53 |
| 15 | 72.472 | 2.887 | | |
| 16* | 108.560 | 7.184 | 1.85400 | 40.38 |
| 17* | -31.014 | variable | | |
| 18 | 43.217 | 2.199 | 1.69895 | 30.05 |

(continued)

| i | r | d | nd | vd |
|---|---|---|---|---|
| object | infinity | variable:d0 | | |
| 19 | 27.517 | 1.500 | | |
| 20* | 35.973 | 4.971 | 1.80610 | 40.88 |
| 21* | 79.414 | 24.709 | | |
| 22 | infinity | 1.410 | 1.51680 | 64.20 |
| 23 | infinity | 0.800 | | |
| image | infinity | | | |

Aspherical Surface Data

| i | K | A4 | A6 | A8 |
|---|---|---|---|---|
| 16 | 0.0000E+00 | -5.9034E-07 | 2.0269E-09 | 0.0000E+00 |
| 17 | 0.0000E+00 | 1.5681E-06 | 3.3261E-09 | -4.2532E-12 |
| 20 | 0.0000E+00 | 2.0071E-06 | 9.2821E-09 | 2.5723E- 11 |
| 21 | 0.0000E+00 | 1.8517E-06 | 9.9029E-09 | 2.4581E-11 |

Aspherical Surface Data

| i | A10 | A12 | A14 | A16 |
|---|---|---|---|---|
| 16 | 0.0000E+00 | 0.0000E+00 | 0.0000E+00 | 0.0000E+00 |
| 17 | 1.0466E-14 | 0.0000E+00 | 0.0000E+00 | 0.0000E+00 |
| 20 | 0.0000E+00 | 0.0000E+00 | 0.0000E+00 | 0.0000E+00 |
| 21 | 2.8631E-14 | 0.0000E+00 | 0.0000E+00 | 0.0000E+00 |

Miscellaneous Data

| | POS1 | POS2 | POS3 |
|---|---|---|---|
| Fl | 48.773 | 48.202 | 47.777 |
| Fno. | 1.440 | 1.467 | 1.536 |
| ω | 23.926 | 23.507 | 23.033 |
| y'max | 21.64 | 21.64 | 21.64 |
| TL | 142.000 | 142.000 | 142.000 |
| BF | 0.800 | 0.800 | 0.800 |
| d0 | infinity | 858.000 | 458.000 |
| d11 | 10.714 | 6.574 | 3.261 |
| d17 | 3.545 | 7.685 | 10.998 |

Lens Group Data

| Group (Surface) | Focal Length |
|---|---|
| 1 (1-10) | 153.206 |
| 2 (12-17) | 64.763 |
| 3 (18-21) | 260.162 |

**Example 3**

Unit : mm

### Surface Data

| i | r | d | nd | vd |
|---|---|---|---|---|
| object | infinity | variable:d0 | | |
| 1 | 89.438 | 2.400 | 1.48749 | 70.44 |
| 2 | 40.722 | 17.372 | | |
| 3 | -33.610 | 2.400 | 1.84666 | 23.78 |
| 4 | -8451.436 | 12.557 | 1.83481 | 42.72 |
| 5 | -42.619 | 0.300 | | |
| 6 | 67.510 | 9.772 | 1.92286 | 20.88 |
| 7 | -289.930 | 0.300 | | |
| 8 | 33.642 | 12.466 | 1.59282 | 68.62 |
| 9 | -112.611 | 2.410 | 1.72825 | 28.32 |
| 10 | 23.930 | 8.815 | | |
| 11(ST) | infinity | variable | | |
| 12 | -28.061 | 1.500 | 1.69895 | 30.05 |
| 13 | -110.161 | 1.394 | | |
| 14* | 80.050 | 7.000 | 1.69350 | 53.18 |
| 15* | -33.190 | variable | | |
| 16 | -81.675 | 7.235 | 1.74100 | 52.64 |
| 17 | -25.260 | 2.410 | 1.59551 | 39.24 |
| 18 | 66.500 | 0.500 | | |
| 19* | 67.881 | 5.852 | 1.80860 | 40.42 |
| 20* | -134.600 | 26.584 | | |
| 21 | infinity | 1.410 | 1.51680 | 64.20 |
| 22 | infinity | 0.800 | | |
| image | infinity | | | |

### Aspherical Surface Data

| i | K | A4 | A6 | A8 |
|---|---|---|---|---|
| 14 | 0.0000E+00 | -1.8228E-06 | 1.0408E-08 | -4.2022E-11 |
| 15 | 0.0000E+00 | 3.3956E-06 | 1.1694E-08 | -4.4887E-11 |
| 19 | 0.0000E+00 | 2.2091E-06 | 1.8949E-08 | -3.7754E-11 |
| 20 | 0.0000E+00 | 5.0546E-06 | 2.0724E-08 | -3.1280E-11 |

### Aspherical Surface Data

| i | A10 | A12 | A14 | A16 |
|---|---|---|---|---|
| 14 | 7.2917E-14 | 0.0000E+00 | 0.0000E+00 | 0.0000E+00 |
| 15 | 8.2847E-14 | 0.0000E+00 | 0.0000E+00 | 0.0000E+00 |
| 19 | 6.7821E-14 | 0.0000E+00 | 0.0000E+00 | 0.0000E+00 |
| 20 | 6.9777E-14 | 0.0000E+00 | 0.0000E+00 | 0.0000E+00 |

### Miscellaneous Data

| | POS1 | POS2 | POS3 |
|---|---|---|---|
| Fl | 49.799 | 49.219 | 48.831 |
| Fno. | 1.440 | 1.545 | 1.644 |
| ω | 23.487 | 23.121 | 22.677 |
| y'max | 21.64 | 21.64 | 21.64 |
| TL | 142.000 | 142.000 | 142.000 |
| BF | 0.800 | 0.800 | 0.800 |

(continued)

| | POS1 | POS2 | POS3 |
|---|---|---|---|
| d0 | infinity | 858.000 | 458.000 |
| d11 | 14.993 | 10.237 | 6.519 |
| d15 | 3.530 | 8.286 | 12.005 |

Lens Group Data

| Group (Surface) | Focal Length |
|---|---|
| 1 (1-10) | 113.268 |
| 2 (12-15) | 74.902 |
| 3 (16-20) | 157.262 |

**Example 4**

Unit : mm

Surface Data

| i | r | d | nd | vd |
|---|---|---|---|---|
| object | infinity | variable:d0 | | |
| 1 | 96.494 | 2.400 | 1.48749 | 70.44 |
| 2 | 45.680 | 22.160 | | |
| 3 | -35.353 | 4.233 | 1.84666 | 23.78 |
| 4 | 5613.933 | 13.090 | 1.83481 | 42.72 |
| 5 | -45.620 | 0.300 | | |
| 6 | 63.515 | 10.437 | 1.92286 | 20.88 |
| 7 | -482.971 | 0.300 | | |
| 8 | 34.369 | 13.401 | 1.59282 | 68.62 |
| 9 | -97.106 | 2.410 | 1.72825 | 28.32 |
| 10 | 22.238 | 9.121 | | |
| 11(ST) | infinity | variable | | |
| 12 | -27.521 | 1.500 | 1.69895 | 30.05 |
| 13 | -140.098 | 0.300 | | |
| 14* | 66.080 | 7.000 | 1.69350 | 53.18 |
| 15* | -31.832 | variable | | |
| 16 | -63.687 | 8.281 | 1.77250 | 49.60 |
| 17 | -23.931 | 2.410 | 1.59551 | 39.24 |
| 18 | 72.100 | 1.000 | | |
| 19* | 65.287 | 6.264 | 1.80860 | 40.42 |
| 20* | -107.586 | 26.790 | | |
| 21 | infinity | 1.410 | 1.51680 | 64.20 |
| 22 | infinity | 0.800 | | |
| image | infinity | | | |

Aspherical Surface Data

| i | K | A4 | A6 | A8 |
|---|---|---|---|---|
| 14 | 0.0000E+00 | -1.7117E-06 | 4.9153E-09 | -1.2005E-11 |
| 15 | 0.0000E+00 | 4.7036E-06 | 4.1746E-09 | -2.0961E-12 |
| 19 | 0.0000E+00 | 2.3588E-06 | 1.3645E-08 | -8.9338E-12 |
| 20 | 0.0000E+00 | 5.7243E-06 | 1.4818E-08 | 9.1760E-12 |

Aspherical Surface Data

| i | A10 | A12 | A14 | A16 |
|---|---|---|---|---|
| 14 | -2.6454E-15 | 0.0000E+00 | 0.0000E+00 | 0.0000E+00 |
| 15 | -1.1846E-14 | 0.0000E+00 | 0.0000E+00 | 0.0000E+00 |
| 19 | -5.5146E-15 | 0.0000E+00 | 0.0000E+00 | 0.0000E+00 |
| 20 | -3.1274E-14 | 0.0000E+00 | 0.0000E+00 | 0.0000E+00 |

Miscellaneous Data

| | POS1 | POS2 | POS3 |
|---|---|---|---|
| F1 | 49.887 | 49.778 | 49.765 |
| Fno. | 1.440 | 1.554 | 1.656 |
| ω | 23.450 | 23.026 | 22.515 |
| y'max | 21.64 | 21.64 | 21.64 |
| TL | 155.000 | 155.000 | 155.000 |
| BF | 0.800 | 0.800 | 0.800 |
| d0 | infinity | 845.000 | 445.000 |
| d11 | 17.860 | 12.978 | 9.043 |
| d15 | 3.533 | 8.415 | 12.350 |

Lens Group Data

| Group (Surface) | Focal Length |
|---|---|
| 1 (1-10) | 131.812 |
| 2 (12-15) | 72.669 |
| 3 (16-20) | 120.234 |

**Table 1**

| Conditional Formula | | Example 1 | Example 2 | Example 3 | Example 4 |
|---|---|---|---|---|---|
| (1) | P1/P | 0.480 | 0.320 | 0.440 | 0.378 |
| (2) | P1/P2 | 0.673 | 0.424 | 0.661 | 0.551 |
| (3) | (P1+P3)/P | 0.747 | 0.507 | 0.756 | 0.793 |
| (4) | P2/P | 0.713 | 0.754 | 0.665 | 0.686 |

**Claims**

1. An imaging lens system comprising, from an object side, a first lens group (Gr1) having a positive optical power, a second lens group (Gr2) having a positive optical power, and a third lens group (Gr3) having a positive optical power, wherein
a most object-side lens element in the first lens group has a negative optical power, and a lens element immediately subsequent thereto has a negative optical power,
during focusing from an object at infinity to an object at a close distance, while the first and third lens groups remain stationary relative to an image surface (IM), the second lens group moves toward the object side,
the second lens group has at least one negative lens element, and
conditional formulae (1) to (3) below are fulfilled:

$$0.2 < P1 / P < 0.6 \qquad\qquad (1)$$

$$0.3 < P1 / P2 < 0.9 \tag{2}$$

$$0.45 < (P1 + P3) / P < 1.0 \tag{3}$$

where

> P1 represents an optical power of the first lens group;
> P2 represents an optical power of the second lens group;
> P3 represents an optical power of the third lens group; and
> P represents an optical power of the entire system in an infinity shooting condition.

2. The imaging lens system of claim 1, wherein
a most image-side lens element in the first lens group has a negative optical power.

3. The imaging lens system of any one of claims 1 to 2, wherein
conditional formula (4) below is fulfilled:

$$0.3 < P2 / P < 0.95 \tag{4}$$

where

> P2 represents the optical power of the second lens group; and
> P represents the optical power of the entire system in the infinity shooting condition.

4. The imaging lens system of any one of claims 1 to 3, wherein
an aperture stop (ST) is provided between the first and second lens groups.

5. The imaging lens system of any one of claims 1 to 4, wherein
in the first lens group, three or more lens elements having a positive optical power are arranged successively.

6. The imaging lens system of any one of claims 1 to 5, wherein
at least one of the lens elements having a positive optical power within the first lens group fulfills conditional formula (5) below:

$$nd > 1.79 \tag{5}$$

where

> nd represents a refractive index for a d-line.

7. The imaging lens system of any one of claims 1 to 6, wherein
at least one of the lens elements having a positive optical power within the first lens group fulfills conditional formula (6) below:

$$vd > 60 \tag{6}$$

where

> vd represents an Abbe number for the d-line.

8. An imaging optical device comprising the imaging lens system of any one of claims 1 to 7 and an image sensor that converts an optical image formed on an image-sensing surface into an electrical signal, wherein

the imaging lens system is arranged such that an optical image of a subject is formed on an imaging surface of the image sensor.

9. A digital appliance (DU) comprising the imaging optical device of claim 8 so as to be additionally provided with at least one of a function of shooting a still image of the subject and a function of shooting a moving image of the subject

**Patentansprüche**

1. Bildgebungslinsensystem, umfassend, von einer Objektseite her, eine erste Linsengruppe (Gr1), die einen positiven Brechwert aufweist, eine zweite Linsengruppe (Gr2), die einen positiven Brechwert aufweist, und eine dritte Linsengruppe (Gr3), die einen positiven Brechwert aufweist, wobei
ein objektseitigstes Linsenelement in der ersten Linsengruppe einen negativen Brechwert aufweist und ein direkt an dieses anschließendes Linsenelement einen negativen Brechwert aufweist,
sich während eines Fokussierens von einem Objekt in der Unendlichkeit auf ein Objekt in kurzer Distanz, während die erste und die dritte Linsengruppe bezüglich einer Bildfläche (IM) stationär bleiben, die zweite Linsengruppe zu der Objektseite bewegt,
die zweite Linsengruppe mindestens ein negatives Linsenelement aufweist, und
die nachfolgenden bedingten Formeln (1) bis (3) erfüllt sind:

$$0,2 < P1 / P < 0,6 \qquad\qquad (1)$$

$$0,3 < P1 / P2 < 0,9 \qquad\qquad (2)$$

$$0,45 < (P1 + P3) / P < 1,0 \qquad\qquad (3)$$

wobei

P1 einen Brechwert der ersten Linsengruppe repräsentiert;
P2 einen Brechwert der zweiten Linsengruppe repräsentiert;
P3 einen Brechwert der dritten Linsengruppe repräsentiert; und
P einen Brechwert des gesamten Systems unter einer Unendlichkeitsaufnahmebedingung repräsentiert.

2. Bildgebungslinsensystem nach Anspruch 1, wobei
ein bildseitigstes Linsenelement in der ersten Linsengruppe einen negativen Brechwert aufweist.

3. Bildgebungslinsensystem nach einem der Ansprüche 1 bis 2, wobei
die nachfolgende bedingte Formel (4) erfüllt ist:

$$0,3 < P2 / P < 0,95 \qquad\qquad (4)$$

wobei

P2 den Brechwert der zweiten Linsengruppe repräsentiert; und
P den Brechwert des gesamten Systems unter der Unendlichkeitsaufnahmebedingung repräsentiert.

4. Bildgebungslinsensystem nach einem der Ansprüche 1 bis 3, wobei
eine Blendenstufe (ST) zwischen der ersten und der zweiten Linsengruppe bereitgestellt ist.

5. Bildgebungslinsensystem nach einem der Ansprüche 1 bis 4, wobei
in der ersten Linsengruppe drei oder mehr Linsenelemente, die einen positiven Brechwert aufweisen, aufeinanderfolgend angeordnet sind.

**6.** Bildgebungslinsensystem nach einem der Ansprüche 1 bis 5, wobei
mindestens eines der Linsenelemente, die innerhalb der ersten Linsengruppe einen positiven Brechwert aufweisen, die nachfolgende bedinge Formel (5) erfüllt:

$$nd > 1,79 \tag{5}$$

wobei

nd einen Brechungsindex für eine D-Linie repräsentiert.

**7.** Bildgebungslinsensystem nach einem der Ansprüche 1 bis 6, wobei
mindestens eines der Linsenelemente, die innerhalb der ersten Linsengruppe einen positiven Brechwert aufweisen, die nachfolgende bedinge Formel (6) erfüllt:

$$vd > 60 \tag{6}$$

wobei

vd eine Abbe-Zahl für die D-Linie repräsentiert.

**8.** Optische Bildgebungsvorrichtung, umfassend das Bildgebungslinsensystem nach einem der Ansprüche 1 bis 7 und einen Bildsensor, der ein auf einer Bilderfassungsfläche gebildetes optisches Bild in ein elektrisches Signal umwandelt, wobei
das Bildgebungslinsensystem derart angeordnet ist, dass ein optisches Bild eines Subjekts auf einer Bildgebungsfläche des Bildsensors gebildet wird.

**9.** Digitales Gerät (DU), umfassend die optische Bildgebungsvorrichtung nach Anspruch 8, um zusätzlich mit mindestens einem aus einer Funktion eines Aufnehmens eines unbewegten Bildes des Subjekts und einer Funktion eines Aufnehmens eines sich bewegenden Bildes des Subjekts bereitgestellt zu sein.

**Revendications**

**1.** Système de lentille d'imagerie comprenant, à partir d'un côté objet, un premier groupe de lentilles (Gr1) ayant une puissance optique positive, un deuxième groupe de lentilles (Gr2) ayant une puissance optique positive, et un troisième groupe de lentilles (Gr3) ayant une puissance optique positive, dans lequel
un élément de lentille le plus du côté objet dans le premier groupe de lentilles a une puissance optique négative, et un élément de lentille suivant immédiatement celui-ci a une puissance optique négative,
pendant la mise au point d'un objet à l'infini à un objet à une distance proche, tandis que les premier et troisième groupes de lentilles restent fixes par rapport à une surface d'image (IM), le deuxième groupe de lentilles se déplace vers le côté objet,
le deuxième groupe de lentilles a au moins un élément de lentille négatif, et
les formules conditionnelles (1) à (3) ci-dessous sont satisfaites :

$$0,2 < P1 / P < 0,6 \tag{1}$$

$$0,3 < P1 / P2 < 0,9 \tag{2}$$

$$0,45 < (P1 + P3) / P < 1,0 \tag{3}$$

où

P1 représente une puissance optique du premier groupe de lentilles ;
P2 représente une puissance optique du deuxième groupe de lentilles ;
P3 représente une puissance optique du troisième groupe de lentilles ; et
P représente une puissance optique du système entier dans une condition de prise de vue à l'infini.

2. Système de lentille d'imagerie selon la revendication 1, dans lequel
un élément de lentille le plus du côté image dans le premier groupe de lentilles a une puissance optique négative.

3. Système de lentille d'imagerie selon l'une quelconque des revendications 1 à 2, dans lequel
la formule conditionnelle (4) ci-dessous est satisfaite :

$$0,3 < P2 / P < 0,95 \tag{4}$$

où

P2 représente la puissance optique du deuxième groupe de lentilles ; et
P représente la puissance optique du système entier dans la condition de prise de vue à l'infini.

4. Système de lentille d'imagerie selon l'une quelconque des revendications 1 à 3, dans lequel
un diaphragme d'ouverture (ST) est prévu entre les premier et deuxième groupes de lentilles.

5. Système de lentille d'imagerie selon l'une quelconque des revendications 1 à 4, dans lequel
dans le premier groupe de lentilles, trois éléments de lentille ou plus ayant une puissance optique positive sont agencés successivement.

6. Système de lentille d'imagerie selon l'une quelconque des revendications 1 à 5, dans lequel
au moins l'un des éléments de lentille ayant une puissance optique positive à l'intérieur du premier groupe de lentilles satisfait la formule conditionnelle (5) ci-dessous :

$$nd > 1,79 \tag{5}$$

où

nd représente un indice de réfraction pour une raie d.

7. Système de lentille d'imagerie selon l'une quelconque des revendications 1 à 6, dans lequel
au moins l'un des éléments de lentille ayant une puissance optique positive à l'intérieur du premier groupe de lentilles satisfait la formule conditionnelle (6) ci-dessous :

$$vd > 60 \tag{6}$$

où

vd représente un nombre d'Abbe pour la raie d.

8. Dispositif d'imagerie optique comprenant le système de lentille d'imagerie selon l'une quelconque des revendications 1 à 7 et un capteur d'image qui convertit une image optique formée sur une surface de détection d'image en un signal électrique, dans lequel
le système de lentille d'imagerie est agencé de telle manière qu'une image optique d'un sujet est formée sur une surface d'imagerie du capteur d'image.

9. Appareil numérique (DU) comprenant le dispositif d'imagerie optique selon la revendication 8 de façon à être en outre doté d'au moins l'une d'une fonction de prise de vue d'une image fixe du sujet et d'une fonction de prise de vue d'une image animée du sujet.

FIG.1

EX1-POS1

# FIG.2

## EX2-POS1

# FIG.3

## EX3-POS1

# FIG.4

## EX4-POS1

FIG.5A EX1-POS1   FIG.5B EX1-POS1 FIG.5C EX1-POS1

```
        1.00                T
                                  ---·--- C-line
        0.75                      ——— d-line
                                  — — g-line
        0.50

        0.25

    -0.10-0.050.0 0.050.10
         SPHERICAL
      ABERRATION(mm)
```

```
          S   IMG HT
              21.64

              16.23

       10.82

        5.41

    -0.10-0.05 0.0 0.050.10
      ASTIGMATISM(mm)
```

```
              IMG HT
              21.64

              16.23

              10.82

              5.41

    -5.0 -2.5 0.0 2.5 5.0
       DISTORTION(%)
```

FIG.5D EX1-POS2   FIG.5E EX1-POS2 FIG.5F EX1-POS2

```
        1.00

        0.75

        0.50         ---·--- C-line
                     ——— d-line
        0.25         — — g-line

    -0.10-0.050.0 0.050.10
         SPHERICAL
      ABERRATION(mm)
```

```
     T      S   IMG HT
                21.64

                16.23

                10.82

                5.41

    -0.10-0.05 0.0 0.050.10
      ASTIGMATISM(mm)
```

```
              IMG HT
              21.64

              16.23

              10.82

              5.41

    -5.0 -2.5 0.0 2.5 5.0
       DISTORTION(%)
```

FIG.5G EX1-POS3   FIG.5H EX1-POS3 FIG.5I EX1-POS3

```
        1.00

        0.75

        0.50
                     ---·--- C-line
        0.25         ——— d-line
                     — — g-line

    -0.10-0.050.0 0.050.10
         SPHERICAL
      ABERRATION(mm)
```

```
     T    S   IMG HT
              21.64

              16.23

              10.82

              5.41

    -0.10-0.050.0 0.050.10
      ASTIGMATISM(mm)
```

```
              IMG HT
              21.64

              16.23

              10.82

              5.41

    -5.0 -2.5 0.0 2.5 5.0
       DISTORTION(%)
```

# FIG.6A EX2-POS1   FIG.6B EX2-POS1   FIG.6C EX2-POS1

SPHERICAL
ABERRATION(mm)

ASTIGMATISM(mm)

DISTORTION(%)

# FIG.6D EX2-POS2   FIG.6E EX2-POS2   FIG.6F EX2-POS2

SPHERICAL
ABERRATION(mm)

ASTIGMATISM(mm)

DISTORTION(%)

# FIG.6G EX2-POS3   FIG.6H EX2-POS3   FIG.6I EX2-POS3

SPHERICAL
ABERRATION(mm)

ASTIGMATISM(mm)

DISTORTION(%)

# FIG.7A EX3-POS1

1.00
0.75
0.50
0.25

-0.10 -0.05 0.0 0.05 0.10

SPHERICAL ABERRATION(mm)

C-line
d-line
g-line

# FIG.7B EX3-POS1

S    IMG HT    T
21.64
16.23
10.82
5.41

-0.10 -0.05 0.0 0.05 0.10

ASTIGMATISM(mm)

# FIG.7C EX3-POS1

IMG HT
21.64
16.23
10.82
5.41

-5.0 -2.5 0.0 2.5 5.0

DISTORTION(%)

# FIG.7D EX3-POS2

1.00
0.75
0.50
0.25

-0.10 -0.05 0.0 0.05 0.10

SPHERICAL ABERRATION(mm)

C-line
d-line
g-line

# FIG.7E EX3-POS2

S    IMG HT    T
21.64
16.23
10.82
5.41

-0.10 -0.05 0.0 0.05 0.10

ASTIGMATISM(mm)

# FIG.7F EX3-POS2

IMG HT
21.64
16.23
10.82
5.41

-5.0 -2.5 0.0 2.5 5.0

DISTORTION(%)

# FIG.7G EX3-POS3

1.00
0.75
0.50
0.25

-0.10 -0.05 0.0 0.05 0.10

SPHERICAL ABERRATION(mm)

C-line
d-line
g-line

# FIG.7H EX3-POS3

T  S    IMG HT
21.64
16.23
10.82
5.41

-0.10 -0.05 0.0 0.05 0.10

ASTIGMATISM(mm)

# FIG.7I EX3-POS3

IMG HT
21.64
16.23
10.82
5.41

-5.0 -2.5 0.0 2.5 5.0

DISTORTION(%)

FIG.8A EX4-POS1  FIG.8B EX4-POS1  FIG.8C EX4-POS1

FIG.8D EX4-POS2  FIG.8E EX4-POS2  FIG.8F EX4-POS2

FIG.8G EX4-POS3  FIG.8H EX4-POS3  FIG.8I EX4-POS3

# FIG.9

IM,SS

SIGNAL PROCESSOR ~ 1

AX

CONTROLLER ~ 2

~ DU

LN

MEMORY ~ 3

LU

SR

OPERATION PANEL

DISPLAY

4

5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014048488 A
- JP 2014238608 A
- US 2009244724 A1
- JP 2013025175 A